Europäisches Patentamt

European Patent Office

Office européen des brevets

(19)

(11) EP 1 295 757 A2

(12) EUROPEAN PATENT APPLICATION

(43) Date of publication:
26.03.2003 Bulletin 2003/13

(51) Int Cl.7: B60R 16/02

(21) Application number: 02021086.0

(22) Date of filing: 20.09.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 25.09.2001 JP 2001291304

(71) Applicant: FUJI JUKOGYO KABUSHIKI KAISHA
Tokyo (JP)

(72) Inventors:
• Takase, Akira
  Shinjuku-ku, Tokyo 160-0023 (JP)
• Hirose, Kenji
  Shinjuku-ku, Tokyo 160-0023 (JP)

(74) Representative: Sajda, Wolf E., Dipl.-Phys. et al
MEISSNER, BOLTE & PARTNER
Postfach 86 06 24
81633 München (DE)

(54) **Power system for automobiles**

(57) A power system (10) for a vehicle having a power source (13) for supplying an electric energy to a plurality of electric load groups (11,12) with mutually different voltages, comprises a plurality of load elements (14, 15, 16, 17, 25, 26, 27, 28) forming each electric load group, and a plurality of output means (35, 36, 37, 38) for taking out the electric energy for each preset voltage as an intermediate voltage from the power source, the plurality of output means being located in the power source, wherein the plurality of load elements in either load group are divided into some blocks and connected to each output means so as to allow an electrical power simultaneously consumed by each divided block to become substantially equal. Additionally, one of some blocks divided in the load group is set to have more load than the other blocks. The power system for the vehicle improves the load balancing of the battery (13) without using a special battery monitoring device nor a DC/DC converter while taking out the desired intermediate voltage from the high voltage battery.

FIG.1

EP 1 295 757 A2

**Description**

**BACKGROUND OF THE INVENTION**

Field of the Invention

The present invention relates to a power system for vehicles.

The present application claims priority from Japanese Patent Application No.2001-291304, the disclosure of which is incorporated herein by reference for all purposes.

Description of the Related Prior Art

A standard battery of a voltage 12V (14V power system) has been used for vehicles for many years. However, when new functions such as electric devices (mild hybrid) assisting a start of an engine and an acceleration thereof, an electric power steering, an electric brake, and an electric air-conditioning system, are attempted to be equipped in a vehicle, the electric capacity of the conventional 12V battery is not enough to drive these functions. Therefore, there is an attempt to realize new functions with a high voltage and a high electric power, and an efficient generation of electric power and thus an effective utilization thereof by means of, in future, shifting a power source of an electric system to be mounted on the vehicle to a 36V battery (42V power system) equal to 3 times as high as the voltage which is presently used.

However, it takes so much time in a technical or economical aspect at present time to have only the 42V power system correspond to all electric devices mounted on the vehicle, such as valves for a low voltage, or controllers comprising an ECU. Also, in order to do so, a total amount of load is now too small for the 42V load group. Then, it is necessary for the time being to use dual load systems in the form of using the load systems for 14V and 42V together.

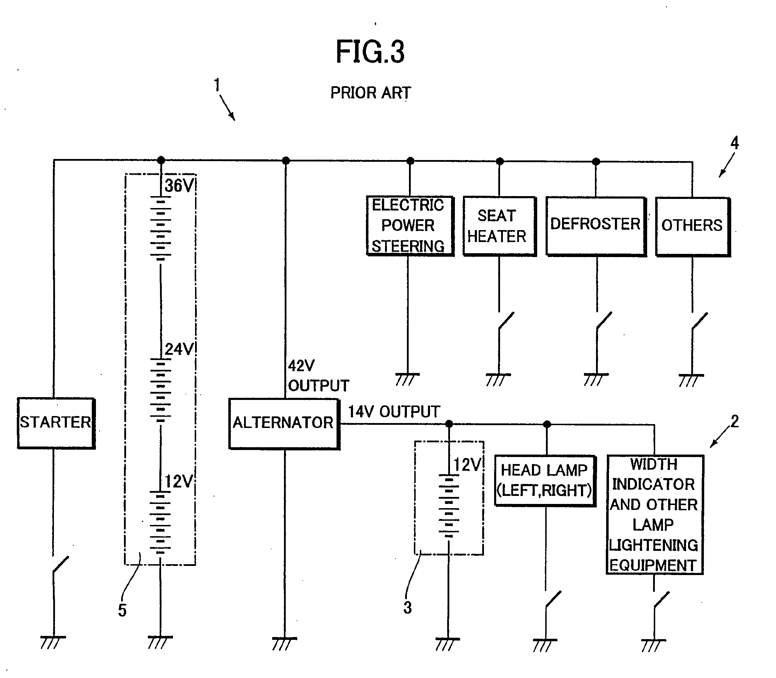

Fig. 3 shows an example of a power system for the vehicles equipped with such dual load systems. For example, a vehicle power system 1 comprises a first battery 3 of voltage 12V to supply an electric energy to a 14V load group 2, and a second battery 5 of voltage 36V to supply the electric energy to a 42V load group 4. For example, the second battery 5 is such that 18 cells (single battery) are serially connected or the three batteries of 12V are serially connected.

However, in order to supply the electric energy to the load groups 2 and 4 whose voltages are 14V and 42V, respectively, in such a vehicle power system 1, two kinds of batteries 3 and 5, each standardized voltage of which is difficult, are necessary. As a result, the costs for parts rise, and at the same time, a space for mounting the two kinds of the batteries 3 and 5 must be secured in the vehicle.

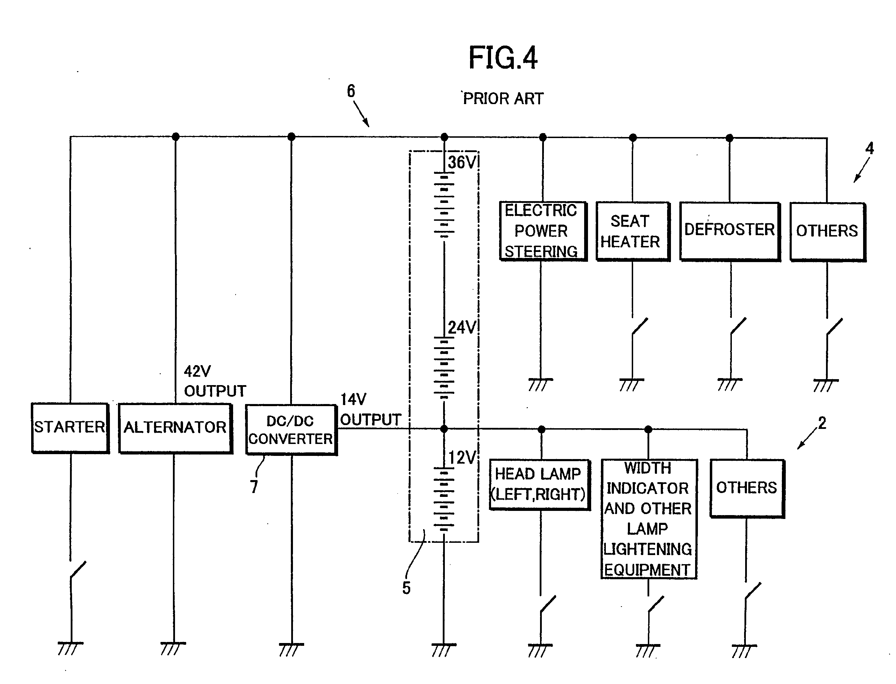

In order to solve the above-mentioned problems, as shown in the vehicle power system 6 of Fig. 4, the battery of 12V such as the first battery 3 can be omitted by taking the 12V energy out from the second battery 5 in place of the 12V battery. However, because, in the second battery 5, the load current of a battery part of 36V and the load current of a battery part of 12V overlap each other, the battery part of 12V not only becomes over-discharged, but any monitor and control and any analysis of their completion are needed for the overcharge and an over-discharge of the second battery 5 which may be caused by the over-discharge of the 12V battery part. Consequently, more costs are needed than reducing the specified battery of 12 V because an expensive DC/DC converter 7 must be equipped for the control as mentioned above.

Thus, the present invention is intended for solving the aforementioned problems of a power system for the conventional vehicles. The purpose of the present invention is to provide the power system for the vehicles which enables an improvement of load balancing of the battery to be achieved without equipping a special battery monitoring device or a DC/ DC converter in the power circuit by taking out a desired intermediate voltage from the high voltage battery.

**SUMMARY OF THE INVENTION**

In order to accomplish the above-mentioned purpose, according to one aspect of the present invention, there is provided a power system for vehicles having a power source for supplying an electric energy to a plurality of electric load groups formed with mutually different voltages, the power system comprising a plurality of load elements forming each electric load group, and a plurality of output means for taking out the electric energy for each preset voltage as an intermediate voltage from the power source, the plurality of output means being located into a power source, wherein the plurality of load elements in either load group are divided into a predetermined number of blocks and respectively connected to each output means so as to allow an electrical power simultaneously consumed by each divided block to become substantially equal.

In the power system for vehicles of the present invention, therefore, the power system for the vehicles which improves the load balancing of the battery can be provided without using a special battery monitoring device nor a DC/DC converter while taking out the desired intermediate voltage from the power source.

According to the other aspect of the present invention, one of a predetermined number of blocks divided in the load group is set to have more load than the other blocks, thereby reducing the load applied to one of some blocks.

Furthermore, the load group comprises devices mounted on the vehicles.

## BRIEF DECRIPTION OF THE DRAWINGS

These and other objects and advantages of the present invention will become clearly understood from the following description with reference to the accompanying drawings, wherein:

Fig. 1 is a system configuration view for explaining an embodiment of a power system for vehicles of the present invention;
Fig. 2 is the system configuration view for explaining the other embodiment of the power system for the vehicle of the present invention;
Fig. 3 is the system configuration view for explaining an example of a conventional power system for the vehicle; and
Fig. 4 is the system configuration view for explaining the other example of the conventional power system for the vehicle.

## DETAILED DESCRIPTION OF THE PREFERRED EMBODIMENTS

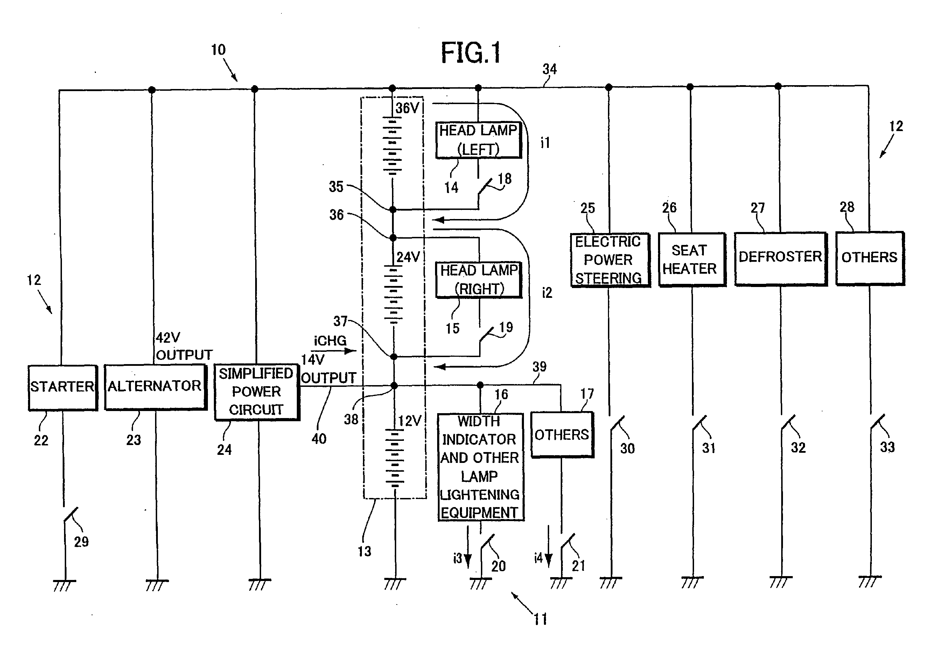

The following is an explanation of an embodiment considered to be the most preferred in the present invention shown in Fig. 1. Fig. 1 shows a view of a system configuration for explaining an embodiment of a power system for vehicles in the present invention.

A vehicle power system 10 of the present invention, as shown in Fig. 1, depicts the system in which dual load systems are applied, comprising a load group 11 of 14V, a load group 12 of 42V, and a high voltage battery 13 (for example, voltage 36V battery) to supply electric energy to the load group 11 of 14V and to the load group 12 of 42V.

The load group 11 of 14V is the system suitable for a drive using the conventional voltage 12V. For example, the load group 11 comprises right and left headlamps 14, 15 with which it is difficult to increase a voltage by using a filament, width indicating lights or other lights (small lamps) 16, and the other system 17 including controllers equipped with an ECU or the like. Additionally, the 14V load group 11 is controlled by ON/OFF switching of relay switches (or the switch to break circuits) 18-21 which are controlled by a control section (not illustrated).

The load group 12 of 42V is the system suitable for the drive using the voltage 36V. For example, it comprises a starter 22 to start the engine which stops idling, an alternator (generator) 23 driven by a belt of the engine for driving accessories, a simplified power circuit 24 for supplying a preset voltage to a battery part when the battery part of a high voltage battery 13 is loaded, an electric power steering 25 for operating an actuator by an electric motor, a seat heater 26 and a defroster 27, of which an electricity consumption is large, respectively, and the other load group 28 of 42V including air compressors or the like driven by the electric motor.

The 42V load group 12 is controlled by ON/OFF switching by relay switches (or the switch to break the circuits) 29-33 controlled by the control section (not illustrated). Additionally, instead of a combined structure of the starter 22 and the alternator 23, a motor/generator may be used which can switch the functions of motors and alternators according to running conditions.

For example, the high voltage battery 13 comprises serially connected and 18 cells of each 2.1V to make the specified voltage 36V or 3 batteries of each 12V which are serially connected. A positive terminal of the high voltage battery is connected to a first power line 34, and a negative terminal thereof is connected and grounded to a vehicle body. Between the first power line 34 and a ground line, the starter 22, the alternator 23, the simplified power circuit 24, the electric power steering 25, the seat heater 26, the defroster 27, and the other 42V load group 28 are connected in parallel.

Furthermore, in an intermediate part of the high voltage battery 13, a plurality of terminals 35-38 (in the present embodiment, there are 4) are provided as output means, and each 12V electric power energy can be taken out as an intermediate voltage from the three parts formed between the first power line 34 and the terminal 35, between the terminals 36 and 37, and between the terminal 38 and the ground line. In other words, the system is designed to set the high voltage load among 36V, 24V and 12V, by choosing and connecting two terminals from arbitrary terminals 35-38.

In an attempt to make the electric power simultaneously consumed approximately equal, between the terminal 35 and the first power line 34, the left head lamp 14 is directly connected, while the right head lamp 15 is connected between the terminals 36 and 37. Between the terminal 38 and the ground line, the width indicating lights and other lights 16 and the other load group 17 of 14V are connected in parallel via the second power line 39 so as to allow the 12V battery part, which is positioned between the terminal 38 and the ground line, to be a little more loaded than the other battery parts.

Furthermore, the third power line 40 extending from the simplified power circuit 24 is designed to be connected to the terminal 38, and the current $ichg$ (for example, the maximum voltage is 14V) is supplied from the simplified power circuit 24 to the battery part of 12V between the terminal 38 and the ground line when necessary. Assuming that the current which flows through the left head lamp 14 and the right head lamp 15 are $i1$ and $i2$, respectively, and that the current flowing through the width indicating light and the other lights 16 is $i3$ and that the current flowing through the other electric load group 17 of 14V is $i4$, and when illuminating the right and left head lamps, in other words, the relay switches 18-21 are turned ON, the current flowing through the left head lamp 14 and right head lamp 15 are approximately identical, thus, the current $ichg1$ determined by the simplified power circuit 24 is calculated as follows;

$$i1 \approx i2 \leq i3 + i4$$

$$ichg1 = i3 + i4 - i1$$

On the other hand, when the small lamps are turned ON, in other words, the relay switches 18 and 19 are OFF and the relay switches 20 and 21 are ON, the current $ichg2$ determined by the simplified power circuit 24 is calculated as follows;

$$i1 = i2 = 0$$

$$ichg2 = i3 + i4$$

Thus, the current $ichg2$ charged when only the small lamps are ON becomes maximum charged current in the load group 11 of 14V.

As described above, according to the power system 10 for the vehicles of the present invention, there is presupposed the existence of the dual load systems comprising the 14V load group 11 and the 42V load group 12. The 14V load group 11, which is substantially equally divided into three, is connected to the intermediate voltage taken from the high voltage battery 13 which supplies the electric energy to these dual load systems, respectively, so that the current simultaneously consumed becomes substantially equal when the relay switches 18-21 are ON. The 14V load group 11 divided into three includes, for example, the right and left head lamps 14 and 15, and the other lamps 16 and 17. Particularly, the battery part of the high voltage battery 13 to which the lamps 16 and 17 are connected is set to be loaded a little more, and at the same time, the charged current occurred by the alternator 23 is designed to be supplied to the battery part by the more amount of the load than that of the other parts through the simplified power circuit 24.

Therefore, according to the present invention, dual load systematization of an existing vehicle can be promoted easily, and the load increase of the high voltage battery 13 can also easily be coped with. Besides, when the right and left head lamps 14 and 15 are connected directly to the high voltage battery 13 without a vehicle body grounding, the load group such as the starter 22, the alternator 23, the electric power steering 25, the seat heater 26, the defroster 27 of which electricity consumption is large, respectively, needs less current by the supplied higher voltage than that of the conventional system, so that fineness of wire harness, and thus light weighting of the vehicle can be planned, and the simplification of 14V load group 11 and thus cost reduction can be promoted.

Additionally, the load of a battery part of the high voltage battery 13 which the other lamps 16 and 17 are connected to can be reduced, and load balancing can be achieved by distributing the load to be applied to the high voltage battery 13 so as to become 12V, 24V and 36V. Moreover, the controlling work in the management of charging state of the high voltage battery 13 can be reduced to a large extent.

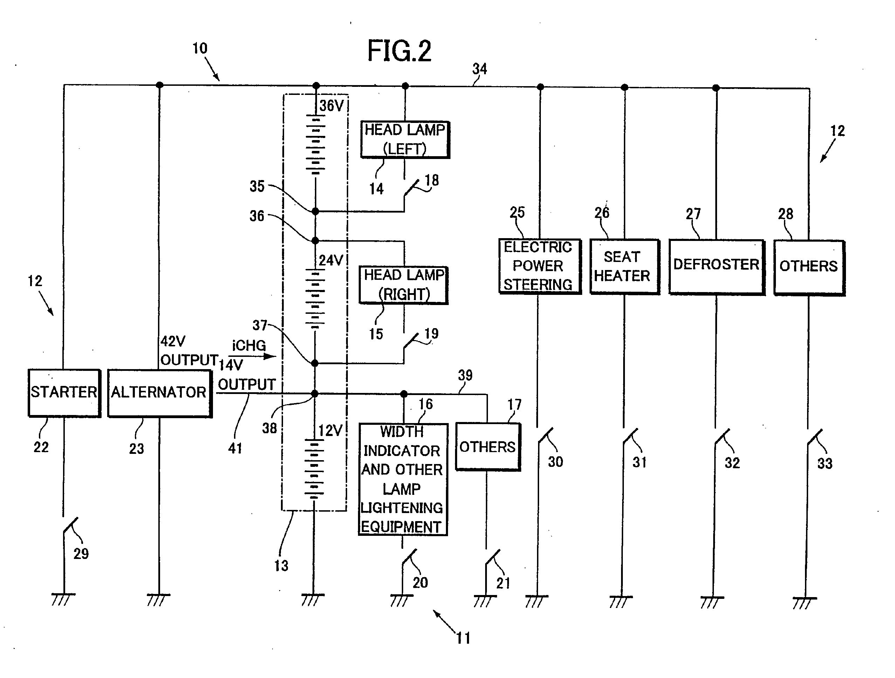

Furthermore, in the present invention, further simplification of the power circuits are achieved, that is, as shown in Fig. 2, the simplified power circuit 24 can be omitted from the power circuit. In addition, a tap (not illustrated) through which the current $ichg$ is supplied via the power line 41 to the battery part of 12V between the terminal 38 and the ground line may be attached to the alternator 23 when necessary.

By doing so, electricity generating efficiency near that of the single output of 42V is realized because the output of the alternator of 14V falls down to a large amount.

Furthermore, because alternator 23 which takes the form of dual voltage output is designed to supply the current $ichg$ when necessary, the problem that the voltage of the both two voltages in the dual load systems is hard to be output can approximately be solved.

Additionally, the present invention may be applied not only to the dual load systems but also to a single 48V load group.

In other words, in the dual load systems of the present invention, each 14V load group 11 which is in a state of being divided into three, of which electricity consumption is almost the same, is connected to an intermediated voltage (for example, the voltage 12V) taken from the high voltage battery 13. However, instead of this structure, the defroster 27 and auxiliary machines such as an air-conditioner, of which electricity consumption can be divided into three in the 42V load group 12, may be connected to the intermediate voltage of the high voltage battery 13 under the situation being divided into three.

As a result, the intermediate voltage can be easily taken out from the high voltage battery 13, without using a special battery monitoring device. Besides, the electric current of the 14V and 42V load groups 11 and 12 can be minimized, and thus the reduction of the costs in the power resource can be realized.

As described so far, according to the power system for the vehicles of the present invention, the power system therefor which improves the load balancing of the battery can be provided without using the special battery monitoring device nor the DC/DC converter while taking out the desired intermediate voltage from the high voltage battery.

While the present invention has been described in conjunction with the preferred specific embodiment thereof, it will be understood that the description is intended to illustrate and not limit the scope of the present invention.

## Claims

1. A power system (10) for a vehicle having a power source (13) for supplying an electric energy to a plurality of electric load groups (11,12) formed with mutually different voltages, comprising:

   a plurality of load elements (14,15,16,17,25,26,27,28) forming each electric load group; and
   a plurality of output means (35,36,37,38) located in the power source for taking out the electric energy for each preset voltage as an intermediate voltage from the power source,

   wherein the plurality of load elements in either load group are divided into a predetermined number of blocks and respectively connected to each output means so as to allow an electrical power simultaneously consumed by each divided block to become substantially equal.

2. The power system according to claim 1, wherein:

   one of said blocks divided in the load group is set to have more load than the other blocks.

3. The power system according to claim 1, wherein said load group comprises devices mounted on said vehicles.

4. A power system (10) for a vehicle having a power source (13) for supplying an electric energy to an electric load group (11) of a low voltage and an electric load group (12) of a high voltage, comprising:

   end output terminals of said power source connected with said load group of the high voltage; and
   a plurality of intermediate output terminals (35,36,37,38) of said power source for taking out the electric energy for said load group of the low voltage as an intermediate voltage from said power source,

   wherein said load group of the low voltage is divided into a plurality of blocks and respectively connected to each output terminal of said end output terminals and said plurality of intermediate output terminals so as to allow an electrical power simultaneously consumed by each divided block to become substantially equal, and
   wherein one of said blocks divided in said load group of the low voltage is set to have more load than the other blocks.

5. The power system according to claim 4, wherein:

said load group of the low voltage and the high voltage comprises devices mounted on said vehicle.

# FIG.1

EP 1 295 757 A2

# FIG.2

STARTER — 22
ALTERNATOR — 23
42V OUTPUT
iCHG
14V OUTPUT — 41

36V — 35
24V — 36
12V — 37, 38
13

HEAD LAMP (LEFT) — 14, 18
HEAD LAMP (RIGHT) — 15, 19
WIDTH INDICATOR AND OTHER LAMP LIGHTENING EQUIPMENT — 16, 20
OTHERS — 17, 21
39

ELECTRIC POWER STEERING — 25, 30
SEAT HEATER — 26, 31
DEFROSTER — 27, 32
OTHERS — 28, 33

10  34  12
29
11

EP 1 295 757 A2

# FIG.3

1

4

36V

24V

12V

42V
OUTPUT

STARTER

ALTERNATOR

14V OUTPUT

ELECTRIC
POWER
STEERING

SEAT
HEATER

DEFROSTER

OTHERS

12V

HEAD LAMP
(LEFT,RIGHT)

WIDTH
INDICATOR
AND OTHER
LAMP
LIGHTENING
EQUIPMENT

2

5

3

EP 1 295 757 A2

# FIG.4

ELECTRIC POWER STEERING

SEAT HEATER

DEFROSTER

OTHERS

STARTER

ALTERNATOR

42V OUTPUT

DC/DC CONVERTER

14V OUTPUT

36V

24V

12V

HEAD LAMP (LEFT,RIGHT)

WIDTH INDICATOR AND OTHER LAMP LIGHTENING EQUIPMENT

OTHERS

EP 1 295 757 A2